# EUROPÄISCHE PATENTANMELDUNG

(11) **EP 3 456 560 A1**
(43) Veröffentlichungstag der Anmeldung: **20.03.2019**
(21) Anmeldenummer: 18193983.6
(22) Anmeldetag: 12.09.2018
(51) Int. Cl.: B60H 1/00, G08G 1/0967, H04W 4/42, H04W 4/44

(54) **OMNIBUS, SYSTEM UND VERFAHREN ZUM BETREIBEN EINER TEMPERATURREGELUNG**

(30) Priorität: 19.09.2017 DE 102017121663
(71) Anmelder: AURORA Konrad G. Schulz GmbH & Co. KG, 69427 Mudau (DE)
(72) Erfinder: Wolf, Hannes, 74722 Buchen (DE)
(74) Vertreter: Baronetzky, Klaus

(57) **Zusammenfassung**

Die Erfindung betrifft einen Nutzfahrzeug, insbesondere Omnibus, Reinigungsfahrzeug, Schneeräumfahrzeug, Zustellungsfahrzeug, Gartenpflegefahrzeug oder Müllfahrzeug, mit einem Fahrerbereich (10a), mit zumindest einem Fahrgastraum (10b) und mit einer Klimaanlage (11), wobei eine Kommunikationsvorrichtung (16) dazu eingerichtet ist, mit einem Remoteserver (18) über eine Drahtlosnetzwerkverbindung (19) zu kommunizieren, und wobei eine Steuervorrichtung (12) dazu eingerichtet ist, basierend auf von einer Erfassungsvorrichtung (14) erfassten und von dem Remoteserver (18) mittels der Kommunikationsvorrichtung (16) empfangenen Daten, eine Temperaturregelung der Klimaanlage (11) zu steuern. Die Erfindung betrifft des Weiteren ein System zur Regelung eines Energieverbrauchs einer Flotte von Nutzfahrzeugen sowie ein Verfahren zum Betreiben einer Temperaturregelung eines Innenraums einer Flotte von Nutzfahrzeugen.

## Beschreibung

Die Erfindung betrifft einen Nutzfahrzeug, insbesondere einen Omnibus, einen Reinigungsfahrzeug, einen Schneeräumfahrzeug, einen Zustellungsfahrzeug, einen Gartenpflegefahrzeug oder einen Müllfahrzeug, gemäß dem Oberbegriff von Anspruch 1. Die Erfindung betrifft des Weiteren ein System zur Regelung eines Energieverbrauchs einer Flotte von Nutzfahrzeugen gemäß dem Oberbegriff von Anspruch 13. Die Erfindung betrifft überdies ein Verfahren zum Betreiben einer Temperaturregelung eines Innenraums einer Flotte von Nutzfahrzeugen gemäß dem Oberbegriff von Anspruch 15.

Kraftfahrzeugklimaregelsysteme, kurz HLK-Systeme, regeln das Klima in Transportfahrzeugen, wie z.B. Omnibussen, Reinigungsfahrzeugen, Schneeräumfahrzeugen, Zustellungsfahrzeugen, Gartenpflegefahrzeugen oder Müllfahrzeugen, um den Temperaturkomfort der Fahrzeuginsassen zu erhalten. In der Regel leitet ein mehrstufiges Gebläse Luft durch Wärmetauscher und gibt an verschiedenen Stellen innerhalb eines Fahrgastraums klimatisierte Luft ab.

DE 10 2014 224 901 A1 offenbart ein System umfassend eine Fahrzeugflotte, wobei jedes Fahrzeug einen Klimaregler mit einem manuellen Modus und einem Auto-Modus umfasst, wobei der Auto-Modus Klimaaktoren in dem Fahrzeug als Reaktion auf ein Modell, das erfasste Klimabedingungen im Fahrzeug mit jeweiligen Betriebseinstellungen verbindet, regelt. Ferner weist das System ein drahtloses Kommunikationssystem auf, das Datenpakete an einen Remoteserver sendet, wenn der Benutzer einen Aufhebungsbefehl erzeugt. Überdies weist das System eine mit dem Remoteserver assoziierte zentrale Datenbank auf, die Datenpakete von der Fahrzeugflotte empfängt, um Muster innerhalb der erhaltenen Abtastvektoren zu identifizieren, die mit einem gleichen Aufhebungsbefehl assoziiert sind.

Der Erfindung liegt somit die Aufgabe zugrunde, einen Nutzfahrzeug mit einer verbesserten HLK-Funktionalität bereitzustellen, welche es ermöglicht, eine Klimatisierung des Nutzfahrzeugs mit einem reduzierten Energiebedarf bereitstellen zu können.

Die Erfindung wird mit einem Nutzfahrzeug mit den Merkmalen des Patentanspruchs 1 gelöst. Die Erfindung wird des Weiteren mit einem System zur Regelung eines Energieverbrauchs einer Flotte von Nutzfahrzeugen mit den Merkmalen des Patentanspruchs 13 gelöst. Die Erfindung wird darüber hinaus mit einem Verfahren zum Betreiben einer Temperaturregelung eines Innenraumes einer Flotte von Nutzfahrzeugen mit den Merkmalen des Patentanspruchs 15 gelöst.

Die vorliegende Erfindung schafft einen Nutzfahrzeug mit einem Fahrerbereich, mit zumindest einem Fahrgastraum und mit einer Klimaanlage, wobei der Fahrgastraum eine Mehrzahl von Klimatisierungszonen aufweist, wobei der Nutzfahrzeug eine Steuervorrichtung, eine Erfassungsvorrichtung und eine Kommunikationsvorrichtung aufweist, wobei die Erfassungsvorrichtung Daten bezüglich einer Anzahl von Fahrgästen, die sich in einer jeweiligen Klimatisierungszone aufhalten und/oder vorgegebene meteorologische Daten erfasst, wobei die Kommunikationsvorrichtung dazu eingerichtet ist, mit einem Remoteserver über eine Drahtlosnetzwerkverbindung zu kommunizieren, und wobei die Steuervorrichtung dazu eingerichtet ist, basierend auf von der Erfassungsvorrichtung erfassten und von dem Remoteserver mittels der Kommunikationsvorrichtung empfangenen Daten, eine Temperaturregelung der Klimaanlage zu steuern.

Die vorliegende Erfindung schafft des Weiteren ein System zur Regelung eines Energieverbrauchs einer Flotte von Nutzfahrzeugen, mit einem Remoteserver, welcher dazu eingerichtet ist, mit einer Kommunikationsvorrichtung jeweiliger Nutzfahrzeuge über eine Drahtlosnetzwerkverbindung zu kommunizieren, und von Erfassungsvorrichtungen der jeweiligen Nutzfahrzeuge erfasste Daten bezüglich einer Anzahl von Fahrgästen, die sich in einer jeweiligen Klimatisierungszone eines Nutzfahrzeugs aufhalten und/oder vorgegebene meteorologische Daten einer Umgebung des Nutzfahrzeugs in einer Datenbank zu speichern und die gespeicherten Daten an jeweilige Nutzfahrzeuge der Flotte in Form von Echtzeitdaten und/oder historischen Daten zum Steuern einer Temperaturregelung einer Klimaanlage eines jeweiligen Nutzfahrzeugs bereitzustellen.

Die vorliegende Erfindung schafft des Weiteren ein Verfahren zum Betreiben einer Temperaturregelung eines Innenraums einer Flotte von Nutzfahrzeugen. Das Verfahren umfasst ein Bereitstellen einer Flotte von Nutzfahrzeugen mit einem Fahrerbereich, mit zumindest einem Fahrgastraum und mit einer Klimaanlage, wobei der Fahrgastraum eine Mehrzahl von Klimatisierungszonen aufweist. Das Verfahren umfasst ferner ein Bereitstellen einer Steuervorrichtung, einer Erfassungsvorrichtung und einer Kommunikationsvorrichtung in jedem Nutzfahrzeug. Das Verfahren umfasst überdies ein Erfassen von Daten bezüglich einer Anzahl von Fahrgästen, die sich in einer jeweiligen Klimatisierungszone aufhalten, und/oder vorgegebenen meteorologischen Daten durch die Erfassungsvorrichtung. Das Verfahren umfasst des Weiteren ein Kommunizieren der Kommunikationsvorrichtung mit einem Remoteserver über eine Drahtlosnetzwerkverbindung. Das Verfahren umfasst darüber hinaus ein Steuern einer Temperaturregelung der Klimaanlage durch die Steuervorrichtung basierend auf von der Erfassungsvorrichtung erfassten und von dem Remoteserver mittels der Kommunikationsvorrichtung empfangenen Daten.

Eine Idee der vorliegenden Erfindung ist es, durch Bereitstellen des Datenaustauschs zwischen Steuervorrichtung eines jeweiligen Nutzfahrzeugs und dem Remoteserver mittels der Drahtlosnetzwerkverbindung auf dem Remoteserver gespeicherte Daten abzurufen bzw. die durch die Erfassungsvorrichtung des Nutzfahrzeugs erfassten steuerungsrelevanten Daten zur Steuerung der Klimaanlage auf den Remoteserver zu übertragen. Dadurch ist die jeweilige Steuervorrichtung des Nutzfahrzeugs in der Lage, nicht nur auf die von der Erfassungsvorrichtung des Nutzfahrzeugs erfassten Daten, sondern auch auf von anderen Nutzfahrzeugen der Flotte erfasste Daten zuzugreifen und somit in vorteilhafter Weise die Klimaanlage basierend auf diesen zusätzlichen Informationen zu betreiben. Dies ist insbesondere für Omnibusse vorteilhaft. Dadurch können beispielsweise ein zu erwartendes Fahrgastaufkommen bzw. zu erwartende meteorologische Bedingungen in die Steuerung der Klimaanlage miteinbezogen werden, welche für den jeweiligen Omnibus bei dem Durchfahren einer vorgegebenen Route relevant werden. Hierdurch kann in vorteilhafter Weise eine zusätzliche Energieersparnis gegenüber herkömmlichen Klimaanlagen erreicht werden, die lediglich auf Daten eines einzelnen Omnibusses zugreifen können.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung ist vorgesehen, dass die von dem Remoteserver mittels der Kommunikationsvorrichtung empfangenen Daten historische Daten und durch weitere Nutzfahrzeuge einer Flotte bereitgestellte Echtzeitdaten sind. Somit kann die Steuerung der Temperaturregelung der Klimaanlage des Nutzfahrzeugs in vorteilhafter Weise durch eine Vielzahl von zusätzlichen Daten gesteuert werden, welche es ermöglichen, die Klimaanlage eines jeweiligen Nutzfahrzeugs vorausschauend regeln zu können.

Gemäß einer weiteren bevorzugten Weiterbildung ist vorgesehen, dass die durch den Nutzfahrzeug und durch die weiteren Nutzfahrzeuge der Flotte bereitgestellten Echtzeitdaten meteorologische Daten wie eine Fahrgastraumtemperatur, eine Außentemperatur, eine Sonneneinstrahlung, eine Bewölkung, eine Luftfeuchtigkeit, Regen und/oder Nebel und eine aktuelle geographische Position eines jeweiligen, die Daten bereitstellenden Nutzfahrzeugs der Flotte umfassen. Somit ist es in vorteilhafter Weise möglich, auf meteorologische Daten anderer Nutzfahrzeuge der Flotte zurückgreifen zu können und damit diese Daten in die Temperaturregelung der Klimaanlage des betreffenden Nutzfahrzeugs einfließen zu lassen.

Gemäß einer weiteren bevorzugten Weiterbildung ist vorgesehen, dass die durch die weiteren Nutzfahrzeuge der Flotte, insbesondere durch die weiteren Omnibusse der Flotte, bereitgestellten Echtzeitdaten eine Anzahl von Fahrgästen, die sich in einer jeweiligen Klimatisierungszone der weiteren Nutzfahrzeuge der Flotte aufhalten, umfassen. Eine Kenntnis der Anzahl von Fahrgästen, die sich in jeweiligen Klimatisierungszonen der weiteren Nutzfahrzeuge der Flotte aufhalten, ermöglicht es beispielsweise zu antizipieren, wie viele Fahrgäste voraussichtlich an vorgegebenen Haltestellen einem nachfolgenden Nutzfahrzeug, insbesondere einem nachfolgenden Omnibus, zusteigen in Abhängigkeit davon, wie groß jeweilige zeitliche Abstände zwischen jeweiligen Nutzfahrzeugen sind.

Gemäß einer weiteren bevorzugten Weiterbildung ist vorgesehen, dass die durch die weiteren Nutzfahrzeuge der Flotte bereitgestellten Echtzeitdaten eine Häufigkeit und Zeitdauer einer Öffnung jeweiliger Türen der weiteren Nutzfahrzeuge der Flotte umfassen. Die Kenntnis dieser Daten ermöglicht es in vorteilhafter Weise vorauszusehen, wie schätzungsweise eine Häufigkeit und Zeitdauer der Öffnung jeweiliger Türen des vorliegenden Nutzfahrzeugs ausfallen wird. In Kenntnis dieser Daten kann die Klimaanlage durch die Steuervorrichtung somit derart gesteuert werden, dass bei beispielsweise einer kurzen Öffnung der Türen ein geringerer Energiebedarf als bei einer längeren durchschnittlichen Öffnung der Türen erforderlich sein wird.

Gemäß einer weiteren bevorzugten Weiterbildung ist vorgesehen, dass die durch die weiteren Nutzfahrzeuge der Flotte bereitgestellten Echtzeitdaten durch eine jeweilige Kameravorrichtung der weiteren Nutzfahrzeuge der Flotte erfasste, an einer gegenüberliegenden, in Gegenfahrtrichtung des Nutzfahrzeugs vorhandenen Haltestelle wartenden Anzahl von Personen, umfasst. Somit kann diese Information in vorteilhafter Weise an den Remoteserver übertragen werden, sodass Nutzfahrzeuge, welche die betreffende Haltestelle in Kürze anfahren, auf diese Daten zurückgreifen und die Steuerung der Klimaanlage daran anpassen können.

Gemäß einer weiteren bevorzugten Weiterbildung ist vorgesehen, dass die Steuervorrichtung dazu eingerichtet ist, zur Temperaturregelung der Klimaanlage Echtzeitdaten weiterer Nutzfahrzeuge der Flotte, welche auf einer Route des Nutzfahrzeugs innerhalb einer vorgegebenen Zeitdauer vor diesem fahren, heranzuziehen. Dies ermöglicht in vorteilhafter Weise ein Miteinbeziehen von Daten der vorausfahrenden Nutzfahrzeuge in die Berechnung des Energiebedarfs zur Klimatisierung des nachfahrenden Nutzfahrzeugs.

Gemäß einer weiteren bevorzugten Weiterbildung ist vorgesehen, dass die historischen Daten eine Fahrgastanzahl auf definierten Nutzfahrzeugrouten, insbesondere Busrouten, in Abhängigkeit vorgegebener zeitlicher Parameter wie Uhrzeit, Wochentag, Woche und/ oder Monat umfassen.

Diese Daten können zusätzlich zu den Echtzeitdaten somit ebenfalls mit in die Berechnung des Energiebedarfs der Klimaanlage des jeweiligen Nutzfahrzeugs miteinbezogen werden und tragen somit zu einer weiteren Verbesserung der Genauigkeit einer Vorhersagbarkeit des Energiebedarfs bei.

Gemäß einer weiteren bevorzugten Weiterbildung ist vorgesehen, dass die historischen Daten mit den zeitlichen Parametern verknüpfte meteorologische Parameter wie eine Fahrgastraumtemperatur, eine Außentemperatur, eine Sonneneinstrahlung, eine Bewölkung, eine Luftfeuchtigkeit, Regen und/oder Nebel umfassen. Der jeweilige Nutzfahrzeug kann somit nicht nur auf die durch andere Nutzfahrzeuge erfassten und an den Remoteserver übertragenen Daten zugreifen, sondern selbstverständlich ebenfalls auf die von fahrzeugeigenen Sensoren der Erfassungsvorrichtung erfassten Umgebungsdaten zurückgreifen.

Gemäß einer weiteren bevorzugten Weiterbildung ist vorgesehen, dass die Steuervorrichtung bei einer auf einer Route des Nutzfahrzeugs, insbesondere des Omnibusses, zu erwartenden Anzahl von Fahrgästen, die kleiner oder gleich einem Schwellwert ist, einen ersten Soll-Wert einer Temperatur jeweiliger Klimatisierungszonen des Fahrgastraums und bei einer zu erwartenden Anzahl von Fahrgästen, die größer dem Schwellwert ist, einen zweiten Soll-Wert einer Temperatur jeweiliger Klimatisierungszonen des Fahrgastraums bestimmt. Somit ist es in vorteilhafter Weise möglich, den Energiebedarf zur Klimatisierung der jeweiligen Klimatisierungszonen des Fahrgastraums in Abhängigkeit von einem Fahrgastaufkommen des Nutzfahrzeugs, insbesondere des Omnibusses, zu regeln. Bei einer größeren Anzahl von Fahrgästen ist es beispielsweise vorteilhaft, stärker zu kühlen bzw. zu heizen, je nachdem, ob Winterbetrieb oder Sommerbetrieb vorliegt, als bei einer geringeren Anzahl von Fahrgästen, respektive keinen Fahrgästen.

Gemäß einer weiteren bevorzugten Weiterbildung ist vorgesehen, dass der erste Soll-Wert und der zweite Soll-Wert des Weiteren in Abhängigkeit eines Verhältnisses und/oder einer Differenz von Innentemperatur zu Außentemperatur des Nutzfahrzeugs durch die Steuervorrichtung bestimmbar sind. Die Kenntnis des Verhältnisses und/oder der Differenz von Innentemperatur zu Außentemperatur des Nutzfahrzeugs ermöglicht die Berechnung des Energiebedarfs, welcher durch die Klimaanlage zum Erreichen eines bestimmten Soll-Werts nötig ist.

Gemäß einer weiteren bevorzugten Weiterbildung ist vorgesehen, dass der Nutzfahrzeug elektrisch angetrieben ist, wobei die Steuervorrichtung dazu eingerichtet ist, die Temperaturregelung der Klimaanlage basierend auf einem aktuellen Ladestand einer Traktionsbatterie des Nutzfahrzeugs zu steuern. Bei ausreichendem bzw. hohem Ladestand der Traktionsbatterie kann somit entsprechend vorgegebener Soll-Werte geheizt bzw. gekühlt werden, wohingegen bei geringem Ladestand der Traktionsbatterie des Nutzfahrzeugs der Ladestand bzw. der Erhalt eines möglichst hohen Ladestands priorisiert werden kann und in Kenntnis dessen eine Leistung der Klimaanlage zurückgeregelt werden kann.

Gemäß einer weiteren bevorzugten Weiterbildung ist vorgesehen, dass der Remoteserver ein Cloud-basierter Server ist. Diese Systemarchitektur bietet eine größtmögliche Flexibilität, zum einen was eine geografische Anordnung des Servers als auch beispielsweise eine Spiegelung bzw. ein Backup von Serverdaten betrifft und somit eine hohe Datensicherheit bei gleichzeitig guter Zuverlässigkeit des Servers ermöglicht.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: ein Systemdiagramm des Systems zur Regelung eines Energieverbrauchs einer Flotte von Nutzfahrzeugen gemäß einer bevorzugten Ausführungsform der Erfindung; und
- Fig. 2: ein Ablaufdiagramm eines Verfahrens zum Betreiben einer Temperaturregelung eines Innenraums einer Flotte von Nutzfahrzeugen gemäß der bevorzugten Ausführungsform der Erfindung.

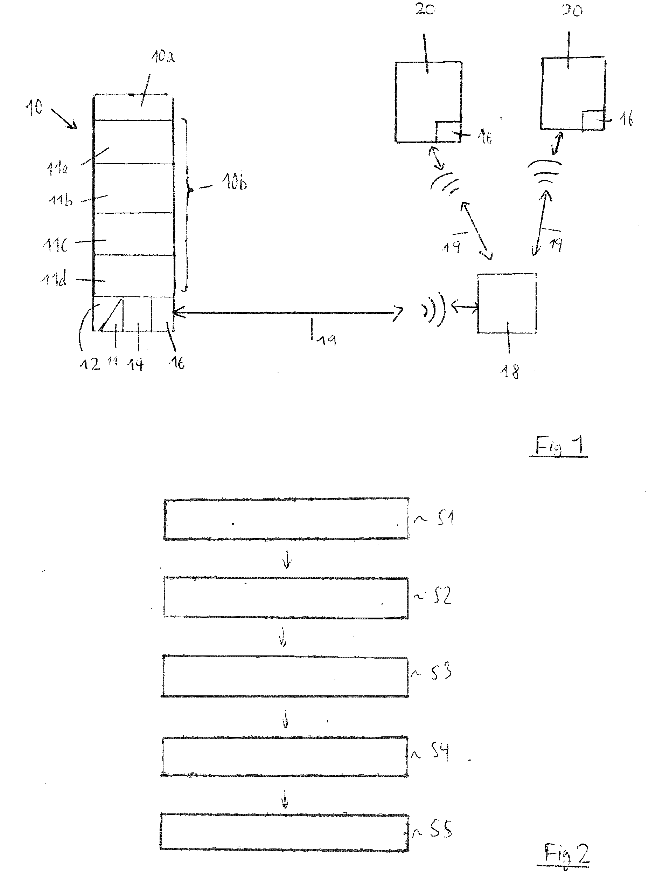

Das in Fig. 1 gezeigte System umfasst einen ersten Nutzfahrzeug 10, einen zweiten Nutzfahrzeug 20 und einen dritten Nutzfahrzeug 30. Die Anzahl der dargestellten Nutzfahrzeuge ist lediglich beispielhaft und kann selbstverständlich hiervon abweichen. Jeder der Nutzfahrzeuge 10, 20, 30 ist über eine Drahtlosnetzwerkverbindung 19 mit einem gemeinsamen Remoteserver 18 verbunden. Jeder der Nutzfahrzeuge 10, 20, 30 weist hierfür eine Kommunikationsvorrichtung 16 auf.

Der erste Nutzfahrzeug 10 weist einen Fahrerbereich 10a und einen Fahrgastraum 10b auf. Des Weiteren weist der Nutzfahrzeug 10 eine Klimaanlage 11 auf, die dazu ausgebildet ist, sowohl den Fahrerbereich 10a als auch den Fahrgastraum 10b zu kühlen, zu lüften und/oder zu heizen.

Der Fahrgastraum 10b des Nutzfahrzeugs 10 weist ferner im vorliegenden Ausführungsbeispiel vier unterschiedliche Klimatisierungszonen 11a, 11b, 11c und 11d auf. Alternativ kann die Anzahl der Klimatisierungszonen abweichen.

Der Nutzfahrzeug 10 weist ferner eine Steuervorrichtung 12 und eine Erfassungsvorrichtung 14 auf. Die Erfassungsvorrichtung 14 ist dazu in der Lage, Daten bezüglich einer Anzahl von Fahrgästen, die sich in einer jeweiligen Klimatisierungszone 11a, 11b, 11c, 11d aufhalten, und vorgegebene meteorologische Daten zu erfassen.

Die Steuervorrichtung 12 ist dazu eingerichtet, basierend auf von der Erfassungsvorrichtung 14 erfassten und mit dem Remoteserver 18 mittels der Kommunikationsvorrichtung 16 empfangenen Daten eine Temperaturregelung der Klimaanlage 11 zu steuern.

Die von dem Remoteserver 18 mittels der Kommunikationsvorrichtung 16 empfangenen Daten sind einerseits historische Daten und andererseits durch weitere Nutzfahrzeuge, d.h. im vorliegenden Ausführungsbeispiel durch den zweiten Nutzfahrzeug 20 und den dritten Nutzfahrzeug 30 der Flotte, bereitgestellte Echtzeitdaten.

Die durch den Nutzfahrzeug 10 und durch die weiteren Nutzfahrzeuge 20, 30 bereitgestellten Echtzeitdaten umfassen meteorologische Daten wie eine Fahrgastraumtemperatur, eine Außentemperatur, eine Sonneneinstrahlung, eine Bewölkung, eine Luftfeuchtigkeit, Regen und/oder Nebel sowie eine aktuelle geografische Position basierend auf beispielsweise GPS-Daten eines jeweiligen, die Daten bereitstellenden Nutzfahrzeugs 20, 30 der Flotte.

Die durch die weiteren Nutzfahrzeuge 20, 30 der Flotte bereitgestellten Echtzeitdaten umfassen ferner eine Anzahl von Fahrgästen, die sich in einer jeweiligen Klimatisierungszone der weiteren Nutzfahrzeuge 20, 30 der Flotte aufhalten.

Die durch die weiteren Nutzfahrzeuge 20, 30 der Flotte bereitgestellten Echtzeitdaten umfassen ferner eine Häufigkeit und Zeitdauer einer Öffnung jeweiliger Türen der weiteren Nutzfahrzeuge 20, 30. Die durch die weiteren Nutzfahrzeuge 20, 30 der Flotte bereitgestellten Echtzeitdaten umfassen darüber hinaus durch eine jeweilige Kameravorrichtung der weiteren Nutzfahrzeuge 20, 30 der Flotte erfasste, an einer gegenüberliegenden, in Gegenfahrtrichtung des Nutzfahrzeugs 20, 30 vorhandenen Haltestelle wartenden Anzahl von Personen.

Die Steuereinrichtung 12 des ersten Nutzfahrzeugs 10 ist ferner dazu eingerichtet, zur Temperaturregelung der Klimaanlage 11 Echtzeitdaten der weiteren Nutzfahrzeuge 20, 30 der Flotte, welche auf einer Route des Nutzfahrzeugs 10 innerhalb einer vorgegebenen Zeitdauer vor diesem fahren, heranzuziehen.

Die historischen Daten umfassen vorzugsweise eine Fahrgastanzahl auf definierten Nutzfahrzeugrouten in Abhängigkeit vorgegebener zeitlicher Parameter, die Uhrzeit, Wochentag, Woche und/oder Monat. Da zu bestimmten Uhrzeiten bzw. Wochentagen mit einem höheren bzw. geringeren Fahrgastaufkommen zu rechnen ist, können diese Daten in vorteilhafter Weise zu einer genaueren Bestimmung des Energiebedarfs der Klimaanlage herangezogen werden. Die historischen Daten umfassen vorzugsweise ferner mit den zeitlichen Parametern verknüpfte meteorologische Parameter wie eine Fahrgastraumtemperatur, eine Außentemperatur, eine Sonneneinstrahlung, eine Bewölkung, eine Luftfeuchtigkeit, Regen und/oder Nebel. Somit kann nicht nur das Fahrgastaufkommen basierend auf zeitlichen Parametern, sondern ebenfalls auf Basis von somit verknüpften meteorologischen Parametern ausgewertet werden und damit in die Berechnung des Energiebedarfs einfließen.

Die Steuervorrichtung kann weiterhin einen zu erwartenden Energiebedarf der Klimaanlage durch Vorhersage der auf der Route des Nutzfahrzeugs 10 zu erwartenden Anzahl von Fahrgästen bestimmt werden, wobei bei einer Anzahl von Fahrgästen, die kleiner oder gleich einem Schwellwert ist, einen ersten Soll-Wert einer Temperatur jeweiliger Klimatisierungszonen des Fahrgastraums 10b bereitstellen bzw. bestimmen und bei einer zu erwartenden Anzahl von Fahrgästen, die größer dem Schwellwert ist, einen zweiten Soll-Wert einer Temperatur jeweiliger Klimatisierungszonen 11a, 11b, 11c, 11d des Fahrgastraums 10b bestimmen, wobei bei einer höheren Anzahl von Fahrgästen ein höherer Energiebedarf nötig ist, um ein jeweiliges Komfortbefinden der Fahrgäste zu erreichen als dies bei einer geringeren Anzahl von Fahrgästen erforderlich ist, da beispielsweise bei einer höheren Anzahl von Fahrgästen vermehrt Fahrgäste ein- und aussteigen und es somit zu längeren Öffnungszeiten von Türen kommt.

Ferner kann der erste Soll-Wert und der zweite Soll-Wert in Abhängigkeit eines Verhältnisses und/oder einer Differenz von Innentemperatur zu Außentemperatur des Nutzfahrzeugs durch die Steuervorrichtung 12 bestimmt werden.

Bei dem vorliegenden Nutzfahrzeug handelt es sich vorzugsweise um einen elektrisch angetriebenen Nutzfahrzeug. Hierbei ist es insbesondere vorteilhaft, den Energiebedarf der Klimaanlage zu optimieren, da hierdurch eine größere Reichweite des Nutzfahrzeugs durch den Energieinhalt der Traktionsbatterie erzielbar ist. In diesem Zusammenhang ist die Steuervorrichtung 12 ebenfalls dazu ausgebildet, die Temperaturregelung der Klimaanlage basierend auf einem aktuellen Ladestand der Traktionsbatterie des Nutzfahrzeugs zu steuern. Das vorliegend beschriebene System ist natürlich ebenfalls bei herkömmlichen, durch einen Verbrennungsmotor angetriebenen Nutzfahrzeug einsetzbar. Der Remoteserver 18 ist vorzugsweise durch einen Cloud-basierten Server ausgebildet. Alternativ sind auch andere Systemarchitekturen bzw. Serversysteme vorstellbar.

Fig. 2 zeigt ein Ablaufdiagramm eines Verfahrens zum Betreiben einer Temperaturregelung eines Innenraums einer Flotte von Nutzfahrzeugen gemäß der bevorzugten Ausführungsform der Erfindung.

Das Verfahren umfasst ein Bereitstellen S1 einer Flotte von Nutzfahrzeugen mit einem Fahrerbereich, mit zumindest einem Fahrgastraum und mit einer Klimaanlage, wobei der Fahrgastraum eine Mehrzahl von Klimatisierungszonen aufweist.

Das Verfahren umfasst ferner ein Bereitstellen S2 einer Steuervorrichtung, einer Erfassungsvorrichtung und einer Kommunikationsvorrichtung in jedem Nutzfahrzeug.

Das Verfahren umfasst überdies ein Erfassen S3 von Daten bezüglich einer Anzahl von Fahrgästen, die sich in einer jeweiligen Klimatisierungszone aufhalten, und/oder vorgegebenen meteorologischen Daten durch die Erfassungsvorrichtung.

Das Verfahren umfasst des Weiteren ein Kommunizieren S4 der Kommunikationsvorrichtung mit einem Remoteserver über eine Drahtlosnetzwerkverbindung.

Das Verfahren umfasst darüber hinaus ein Steuern S5 einer Temperaturregelung der Klimaanlage durch die Steuervorrichtung basierend auf von der Erfassungsvorrichtung erfassten und von dem Remoteserver mittels der Kommunikationsvorrichtung empfangenen Daten.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise können eine Anordnung, Architektur, eine Wahl der Komponenten des Systems zur Regelung des Energiebedarfs der Flotte von Nutzfahrzeugen entsprechend jeweiliger Systemanforderungen abgeändert werden.

## Patentansprüche

1. Nutzfahrzeug (10), insbesondere Omnibus, Reinigungsfahrzeug, Schneeräumfahrzeug, Zustellungsfahrzeug, Gartenpflegefahrzeug oder Müllfahrzeug, mit einem Fahrerbereich (10a), mit zumindest einem Fahrgastraum (10b) und mit einer Klimaanlage (11), wobei der Fahrgastraum (10b) eine Mehrzahl von Klimatisierungszonen (11a, 11b, 11c, 11d) aufweist, **dadurch gekennzeichnet, dass** der Nutzfahrzeug (10) eine Steuervorrichtung (12), eine Erfassungsvorrichtung (14) und eine Kommunikationsvorrichtung (16) aufweist, wobei die Erfassungsvorrichtung (14) Daten bezüglich einer Anzahl von Fahrgästen, die sich in einer jeweiligen Klimatisierungszone (11a, 11b, 11c, 11d) aufhalten und/oder vorgegebene meteorologische Daten erfasst, wobei die Kommunikationsvorrichtung (16) dazu eingerichtet ist, mit einem Remoteserver (18) über eine Drahtlosnetzwerkverbindung (19) zu kommunizieren, und wobei die Steuervorrichtung (12) dazu eingerichtet ist, basierend auf von der Erfassungsvorrichtung (14) erfassten und von dem Remoteserver (18) mittels der Kommunikationsvorrichtung (16) empfangenen Daten, eine Temperaturregelung der Klimaanlage (11) zu steuern.

2. Nutzfahrzeug nach Anspruch 1, **dadurch gekennzeichnet, dass** die von dem Remoteserver (18) mittels der Kommunikationsvorrichtung (16) empfangenen Daten historische Daten und durch weitere Nutzfahrzeuge (20, 30) einer Flotte bereitgestellte Echtzeitdaten sind.

3. Nutzfahrzeug nach Anspruch 2, **dadurch gekennzeichnet, dass** die durch den Nutzfahrzeug (10) und durch die weiteren Nutzfahrzeuge (20, 30) der Flotte bereitgestellten Echtzeitdaten meteorologische Daten wie eine Fahrgastraumtemperatur, eine Außentemperatur, eine Sonneneinstrahlung, eine Bewölkung, eine Luftfeuchtigkeit, Regen und/oder Nebel und eine aktuelle geographische Position eines jeweiligen, die Daten bereitstellenden Nutzfahrzeugs (20, 30) der Flotte umfassen.

4. Nutzfahrzeug nach Anspruch 2 oder 3, **dadurch gekennzeichnet, dass** die durch die weiteren Nutzfahrzeuge (20, 30) der Flotte bereitgestellten Echtzeitdaten eine Anzahl von Fahrgästen, die sich in einer jeweiligen Klimatisierungszone der weiteren Nutzfahrzeuge (20, 30) der Flotte aufhalten, umfassen.

5. Nutzfahrzeug nach einem der Ansprüche 2 bis 4, **dadurch gekennzeichnet, dass** die durch die weiteren Nutzfahrzeuge (20, 30) der Flotte bereitgestellten Echtzeitdaten eine Häufigkeit und Zeitdauer einer Öffnung jeweiliger Türen der weiteren Nutzfahrzeuge (20, 30) der Flotte umfassen.

6. Nutzfahrzeug nach einem der Ansprüche 2 bis 5, **dadurch gekennzeichnet, dass** die durch die weiteren Nutzfahrzeuge (20, 30) der Flotte bereitgestellten Echtzeitdaten durch eine jeweilige Kameravorrichtung der weiteren Nutzfahrzeuge (20, 30) der Flotte erfasste, an einer gegenüberliegenden, in Gegenfahrtrichtung des Nutzfahrzeugs (20, 30) vorhandenen Haltestelle wartenden Anzahl von Personen, umfasst.

7. Nutzfahrzeug nach einem der Ansprüche 1 bis 6, **dadurch gekennzeichnet, dass** die Steuervorrichtung (12) dazu eingerichtet ist, zur Temperaturregelung der Klimaanlage (11) Echtzeitdaten weiterer Nutzfahrzeuge (20, 30) der Flotte, welche auf einer Route des Nutzfahrzeugs (10) innerhalb einer vorgegebenen Zeitdauer vor diesem fahren, heranzuziehen.

8. Nutzfahrzeug nach einem der Ansprüche 2 bis 7, **dadurch gekennzeichnet, dass** die historischen Daten eine Fahrgastanzahl auf definierten Nutzfahrzeugrouten in Abhängigkeit vorgegebener zeitlicher Parameter wie Uhrzeit, Wochentag, Woche und/oder Monat umfassen.

9. Nutzfahrzeug nach Anspruch 8, **dadurch gekennzeichnet, dass** die historischen Daten mit den zeitlichen Parametern verknüpfte meteorologische Parameter wie eine Fahrgastraumtemperatur, eine Außentemperatur, eine Sonneneinstrahlung, eine Bewölkung, eine Luftfeuchtigkeit, Regen und/oder Nebel umfassen.

10. Nutzfahrzeug nach einem der Ansprüche 4 bis 9, **dadurch gekennzeichnet, dass** die Steuervorrichtung (12) bei einer auf einer Route des Nutzfahrzeugs (10) zu erwartenden Anzahl von Fahrgästen, die kleiner oder gleich einem Schwellwert ist, einen ersten Soll-Wert einer Temperatur jeweiliger Klimatisierungszonen (11a, 11b, 11c, 11d) des Fahrgastraums (10b) und bei einer zu erwartenden Anzahl von Fahrgästen, die größer dem Schwellwert ist, einen zweiten Soll-Wert einer Temperatur jeweiliger Klimatisierungszonen (11a, 11b, 11c, 11d) des Fahrgastraums (10b) bestimmt.

11. Nutzfahrzeug nach Anspruch 10, **dadurch gekennzeichnet, dass** der erste Soll-Wert und der zweite Soll-Wert des Weiteren in Abhängigkeit eines Verhältnisses und/oder einer Differenz von Innentemperatur zu Außentemperatur des Nutzfahrzeugs (10) durch die Steuervorrichtung (12) bestimmbar sind.

12. Nutzfahrzeug nach einem der Ansprüche, **dadurch gekennzeichnet, dass** der Nutzfahrzeug elektrisch angetrieben ist, wobei die Steuervorrichtung (12) dazu eingerichtet ist, die Temperaturregelung der Klimaanlage (11) basierend auf einem aktuellen Ladestand einer Traktionsbatterie des Nutzfahrzeugs (10) zu steuern.

13. System zur Regelung eines Energieverbrauchs einer Flotte von Nutzfahrzeugen (10, 20, 30), insbesondere von Omnibussen, Reinigungsfahrzeugen, Schneeräumfahrzeugen, Zustellungsfahrzeugen, Gartenpflegefahrzeugen und/oder Müllfahrzeugen, mit einem Remoteserver (18), welcher dazu eingerichtet ist, mit einer Kommunikationsvorrichtung (16) jeweiliger Nutzfahrzeuge (10, 20, 30) über eine Drahtlosnetzwerkverbindung (19) zu kommunizieren, und von Erfassungsvorrichtungen (14) der jeweiligen Nutzfahrzeuge (10, 20, 30) erfasste Daten bezüglich einer Anzahl von Fahrgästen, die sich in einer jeweiligen Klimatisierungszone (11a, 11b, 11c, 11d) eines Nutzfahrzeugs (10, 20, 30) aufhalten und/oder vorgegebene meteorologische Daten einer Umgebung des Nutzfahrzeugs (10, 20, 30) in einer Datenbank zu speichern und die gespeicherten Daten an jeweilige Nutzfahrzeuge (10, 20, 30) der Flotte in Form von Echtzeitdaten und/oder historischen Daten zum Steuern einer Temperaturregelung einer Klimaanlage (11) eines jeweiligen Nutzfahrzeugs (10, 20, 30) bereitzustellen.

14. System nach Anspruch 13, **dadurch gekennzeichnet, dass** der Remoteserver (18) ein Cloud-basierter Server ist.

15. Verfahren zum Betreiben einer Temperaturregelung eines Innenraums einer Flotte von Nutzfahrzeugen (10, 20, 30), mit den Schritten:
Bereitstellen (S1) einer Flotte von Nutzfahrzeugen (10, 20, 30) mit einem Fahrerbereich (10a), mit zumindest einem Fahrgastraum (10b) und mit einer Klimaanlage (11), wobei der Fahrgastraum (10b) eine Mehrzahl von Klimatisierungszonen (11a, 11b, 11c, 11d) aufweist;
**gekennzeichnet durch**
Bereitstellen (S2) einer Steuervorrichtung (12), einer Erfassungsvorrichtung (14) und einer Kommunikationsvorrichtung (16) in jedem Nutzfahrzeug (10, 20, 30);
Erfassen (S3) von Daten bezüglich einer Anzahl von Fahrgästen, die sich in einer jeweiligen Klimatisierungszone (11a, 11b, 11c, 11d) aufhalten und/oder vorgegebenen meteorologische Daten durch die Erfassungsvorrichtung (14);
Kommunizieren (S4) der Kommunikationsvorrichtung (16) mit einem Remoteserver (18) über eine Drahtlosnetzwerkverbindung (19); und
Steuern (S5) einer Temperaturregelung der Klimaanlage (11) durch die Steuervorrichtung (12) basierend auf von der Erfassungsvorrichtung (14) erfassten und von dem Remoteserver (18) mittels der Kommunikationsvorrichtung (16) empfangenen Daten.
